## Europäisches Patentamt

## European Patent Office

## Office européen des brevets

(11) Veröffentlichungsnummer: **0 164 792**
**B1**

(12) **EUROPÄISCHE PATENTSCHRIFT**

(45) Veröffentlichungstag der Patentschrift:
**28.12.88**

(21) Anmeldenummer: **85200796.2**

(22) Anmeldetag: **20.05.85**

(51) Int. Cl.⁴: **F 16 D  3/00,** F 16 D  3/20,
F 16 D  3/06, F 16 C  3/03

(54) Vorrichtung zum kraftschlüssigen Verbinden zweier Wellen.

(30) Priorität: **13.06.84  CH 2852/84**

(43) Veröffentlichungstag der Anmeldung:
**18.12.85 Patentblatt 85/51**

(45) Bekanntmachung des Hinweises auf die Patenterteilung:
**28.12.88 Patentblatt 88/52**

(84) Benannte Vertragsstaaten:
**AT CH DE FR GB IT LI NL SE**

(56) Entgegenhaltungen:
**BE-A- 896 731**
**FR-A- 1 216 414**
**FR-A- 2 015 517**
**GB-A- 687 286**
**US-A- 4 065 941**
**US-A- 4 136 532**
**US-A- 4 270 367**

(73) Patentinhaber: **Hasler AG, Belpstrasse 23,**
**CH-3000 Bern 14 (CH)**

(72) Erfinder: **Wagner, Alois, Münchenstrasse 13a,**
**D-8037 Olching (DE)**

(74) Vertreter: **Schwerdtel, Eberhard, Dr., c/o Hasler AG**
**Belpstrasse 23, CH-3000 Bern 14 (CH)**

## Beschreibung

Die Erfindung betrifft eine Vorrichtung zum kraftschlüssigen Verbinden einer antreibenden Welle mit einer zu dieser nicht axial ausgerichteten abtreibenden Welle entsprechend dem Oberbegriff von Anspruch 1. Die Vorrichtung ist damit unter dem Begriff «Gelenkwelle» zu subsumieren.

Aus der US-A-4 065 941 ist eine Gelenkwelle als Zwischenstück eines Universalwerkzeuges, z.B. eines Steckschlüsselsatzes, bekannt. Diese Gelenkwelle umfasst einen Tubus, in dem zwei kugelförmige Gelenke mittels je eines Mitnehmerschlitzes und eines Mitnehmerbolzens kardanisch gelagert sind. Eine innen zwischen den Gelenken wirkende Schraubenfeder dämpft Schläge und vermindert damit den Verschleiss. Eine zweite, aussen zwischen dem Tubus und der antreibenden Welle angeordnete Schraubenfeder sorgt für die automatische Geradstellung des einen Gelenks bei Nichtbenutzung der Gelenkwelle.

Aus der Patentschrift BE-A-896 731 ist eine Gelenkwelle für Motorantriebe bekannt. Diese weist eine verdrehungsstarre Schiebeverbindung und zwei kardanische Gelenke auf. Die Gelenke bestehen aus kugelförmigen, geschlitzten Wellenenden, die in zylindrische, bolzentragende Lager eingeschoben und in diesen durch federnde Scheiben unverlierbar und spielfrei gehalten sind.

Aus der US-A-4 270 367 ist weiter eine Kupplungswelle bekannt, bei der zwei ineinanderliegende, durch Nuten gegen Verdrehung geschützte Tubusse durch eine innenliegende Schraubenfeder gegeneinander verspannt sind. Diese Kupplungswelle lässt sich zum kraftschlüssigen Verbinden zweier fluchtender Wellen auf deren Enden aufstecken und hält sich in dieser Montageposition ausschliesslich auf Grund der Kraft der Schraubenfeder.

Ausgehend von diesem Stand der Technik ist es die Aufgabe der Erfindung, eine verbesserte, universell einsetzbare Vorrichtung anzugeben, mittels der zwei nicht fluchtende Wellen kraftschlüssig miteinander verbindbar sind. Diese Vorrichtung soll vor allem einfach und preiswert herstellbar sein.

Die Vorrichtung, die diese Aufgabe erfüllt, ist durch den kennzeichnenden Teil von Anspruch 1 gekennzeichnet. Die anderen Ansprüche geben Ausgestaltungen der Erfindung an.

Die Vorrichtung ist als Kunststoff-Spritzgussteil sehr preisgünstig herzustellen. Die Montage erfordert kein Werkzeug, sondern erfolgt ausschliesslich durch Einhängen in die an- und abtreibende Welle, was ebenfalls äusserst preisgünstig ist.

Mit diesen Eigenschaften bildet die Vorrichtung für zahlreiche Anwendungen, insbesondere bei Büromaschinen, ein sehr nützliches Bauelement, mit dessen Hilfe sich Längen- und Winkeldifferenzen sowie Versetzungen zwischen Wellen einfach ausgleichen lassen.

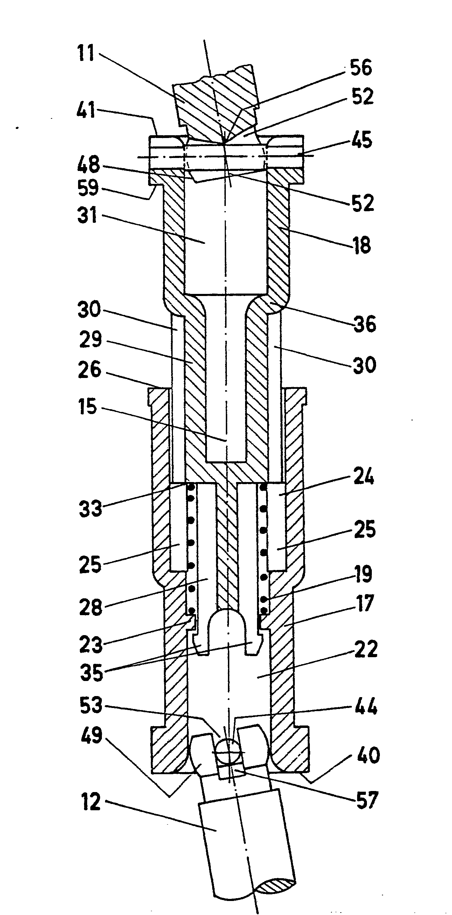

Im folgenden wird die Erfindung anhand einer einzigen Figur beispielsweise näher beschrieben.

Die Figur zeigt eine teilweise geschnittene Seitenansicht der Vorrichtung zum kraftschlüssigen Verbinden einer antreibenden Welle 11 mit einer abtreibenden Welle 12. Zwischen diesen versetzt angeordneten Welle 11 und 12 liegt eine Zwischenwelle 15. Diese Zwischenwelle setzt sich zusammen aus zwei gespritzten Kunststoffteilen 17, 18 und einer Schraubenfeder 19. Das eine Kunststoffteil 17, im folgenden Aussenteil genannt, bildet im wesentlichen eine Röhre, die im äusseren Bereich als axiale, zylindrische Bohrung 22, im mittleren Bereich als Verengung 23 und im inneren Bereich als Öffnung 24 mit z.B. vier Längsführungsnuten 25 ausgebildet ist.

Das andere Kunststoffteil 18, im folgenden Innenteil genannt, ist ausgebildet zum Einschieben in das Aussenteil 17. Hierzu weist das Innenteil 18 eine im Querschnitt kreuzförmige Verlängerung 28 auf, die durch die Verengung 23 geführt wird. Weiter weist es einen Führungsbereich 29 auf, der mit seinen Führungsstegen 30 in den Längsführungsnuten 25 in Längsrichtung gleiten kann. Und schliesslich weist es in seinem äusseren Bereich eine axiale, zylindrische Bohrung 31 auf, die der Bohrung 22 entspricht.

Das Aussenteil 17 und das Innenteil 18 bilden zusammen eine Schiebeverbindung, die in Drehrichtung winkelstarr und in Axialrichtung verschieblich ist. Zwischen der Verengung 23 des Aussenteils 17 und einer Anschlagkante 33 des Innenteils 18, aufgesteckt auf die Verlängerung 28, ist die Schraubenfeder 19 eingespannt. Diese teilweise zusammengedrückte Feder versucht die beiden Teile 17, 18 auseinander zu drücken.

An der Verlängerung 28 des Innenteils 18 sind federnde, angespitzte Haltehaken 35 angebracht, mittels derer das Innenteil 18 unverlierbar mit dem Aussenteil 17 zusammengeschnappt ist. Die widerhakenähnlichen Rückkanten der Haltehaken 35 bilden zusammen mit der Verengung 23 einen ersten Anschlag zur Begrenzung des Federweges. Einen zweiten Anschlag bildet eine Kante 36 des Innenteils 18 mit der «inneren» Stirnfläche 26 des Aussenteils 17.

An den «äusseren» Stirnflächen 40 bzw. 41 des Aussenteils 17 und des Innenteils 18 ist quer zur jeweiligen Bohrung 22 bzw. 31 je ein metallischer Mitnehmerbolzen 44 bzw. 45 befestigt. Diese Bolzen 44, 45 entsprechen in ihrer Länge dem Aussendurchmesser des Aussen- (17) bzw. des Innenteils 18. In ihrem mittleren Bereich, der dem Durchmesser der axialen Bohrungen 31 bzw. 22 entspricht, sind die Bolzen dicker als an ihren äusseren Enden. Mit diesen äusseren Enden sind die Bolzen von den Stirnflächen 40, 41 der Teile 17, 18 her in sackartige, nach innen sich erweiternde, radial einander gegenüberliegende Schlitze in der Wandung der Teile 17, 18 eingeschnappt.

Aufgrund der geschilderten Ausführung ist die Montage der Mitnehmerbolzen 44, 45 sehr einfach und sind diese in ihrer Längsrichtung und quer dazu starr und unverlierbar gehalten. Die relative Verdickung der Mitnehmerbolzen 44, 45 in ihrem mittleren Bereich ist dadurch leicht herstellbar, dass die Bolzen aus Rundmaterial abgelängt und an den äusseren Enden etwas abgedreht werden.

Es ist grundsätzlich möglich, die Bolzen 44 und 45 wie gezeigt um 90° gegeneinander versetzt anzuordnen oder zueinander parallel. In letzterem Fall ergibt sich im allgemeinen eine gleichförmigere Bewegung.

Die antreibende und die abtreibende Achse 11, 12 weisen an ihren Stirnseiten kugel- oder tonnenförmige Gelenkköpfe 48 bzw. 49 auf, mittels derer sie in die axialen Bohrungen 31 bzw. 22 eingesteckt sind. Jeder der Gelenkköpfe ist mit einer einseitig offenen, schlitzartigen Nut 52 bzw. 53 versehen. Die Böden der Nuten weisen in beiden Fällen je eine zentrische Erhöhung 56 bzw. 57 auf.

Die Mitnehmerbolzen 44, 45 sind in ihrem Durchmesser abgestimmt auf die Breite der Nuten 53, 52, in die sie eingesteckt sind.

Die Mitnehmerbolzen 44, 45, die Nuten 52, 53, die Gelenkköpfe 48, 49 und die axialen Bohrungen 31, 22 bilden zusammen zwei kardanische Gelenke. Die Schraubenfeder 19 drückt ständig das Aussen- (17) und Innenteil 18 auseinander und sorgt hierdurch dafür, dass die Mitnehmerbolzen 44, 45 stets unter Druck an den Erhöhungen 57 bzw. 56 der Nutböden anliegen.

Die unverlierbar miteinander verbundenen Innen- (18) und Aussenteile 17 sowie die Feder 19 bilden eine Baueinheit, die eine durch die Feder 19 bedingte Schiebeverbindung darstellt und die Teile von zwei kardanischen Gelenken umfasst. Diese Teile sind die Mitnehmerbolzen 44, 45 sowie die axialen Bohrungen 31, 22, die die seitliche Führung der Gelenke übernehmen.

Zur Vervollständigung der Gelenke dienen die Gelenkköpfe 48, 49 und deren Schlitznuten 52, 53. Der grosse Vorteil dieser Aufteilung besteht darin, dass die Zwischenwelle 15 nach Montage der antreibenden 11 und der abtreibenden Welle 12 zur Verbindung derselben einzig im zusammengedrückten Zustand auf die geschlitzten Wellenenden aufgesteckt werden muss, wozu kein Werkzeug erforderlich ist. Umgekehrt ist natürlich jederzeit auch eine Demontage auf einfachste Weise möglich.

Im folgenden werden einige Varianten der erfindungsgemässen Vorrichtung angegeben:

– Das Aussen- (17) und das Innenteil 18 können statt im Spritzgussverfahren aus Kunststoff teilweise oder vollständig aus anderen Materialien, z.B. Metall, gefertigt sein.

– Die Gelenkköpfe 48, 49 können im Durchmesser grösser, gleich oder kleiner als die Durchmesser der zugeordneten Wellen 11, 12 sein. Sie können spanabhebend aus den Wellen 11, 12 herausgearbeitet oder als separate Teile starr mit den Wellen verbunden sein.

– Die zentrischen Erhöhungen 56, 57 an den Böden der Nuten 52, 53 können wie gezeigt keilförmig ausgebildet sein oder pfeilspitzenförmig mit konkaven Flanken, erzeugt z.B. durch einen Fräser, der quer zur Wellenachse geführt ist. Die Erhöhungen können jedoch auch durch in die Nuten 52, 53 eingesetzte Lagerspitzen gebildet werden.

– Die Schraubenfeder 19 kann durch ein anderes, geeignet ausgebildetes, federndes Teil ersetzt sein. Weiter kann sie statt innen in der Zwischenwelle 15 aussen an dieser angeordnet sein, indem sie z.B. zwischen der Stirnfläche 26 des Aussenteils 17 und dem Kragen 59 des Innenteils 18 eingespannt ist.

– Die Haltehaken 35 können an anderer Stelle angeordnet sein, beispielsweise an den Längsführungsnuten 25.

**Patentansprüche**

1. Vorrichtung zum kraftschlüssigen Verbinden einer antreibenden Welle (11) mit einer zu dieser nicht axial ausgerichteten abtreibenden Welle (12), wobei zwei kardanische Gelenke vorgesehen sind, mit einer zwischen diesen angeordneten Zwischenwelle (15), wobei jedes der Gelenke gebildet wird aus einem kugelförmigen Gelenkkopf (48, 49), der mit einer der Wellen (11, 12) starr verbunden ist, aus einer axialen, zylindrischen Bohrung (31, 22) in der Zwischenwelle (15), in die der Gelenkkopf (48, 49) eingeschoben ist, aus einem Mitnehmerschlitz im Gelenkkopf (48, 49) und aus einem als Stahlstift ausgebildeten, in seiner Form auf die Bohrung (31, 22) und den Mitnehmerschlitz abgestimmten Mitnehmerbolzen (45, 44), der an der Zwischenwelle (15) verankert ist und durch den Mitnehmerschlitz hindurchgreift, und wobei eine im Inneren der Zwischenwelle (15) angeordnete Schraubenfeder (19) auf die Gelenke Druck ausübt, dadurch gekennzeichnet,

– dass die Mitnehmerschlitze der Gelenkköpfe (48, 49) als einseitig offene Nuten (52, 53) ausgebildet sind,

– dass die Zwischenwelle (15) ein hülsenförmiges Aussenteil (17) und ein in dieses eingeschobenes, axial verschiebliches Innenteil (18) umfasst, welche Teile (17, 18) zusammen eine verdrehungsstarre Schiebeverbindung bilden,

– dass das Aussen- (17) und das Innenteil (18) als gespritzte Kunststoffelemente ausgebildet sind,

– dass im Bereich der axialen, zylindrischen Bohrung (31, 22) des Aussen- (17) und des Innenteils (18) zu deren Stirnfläche (40, 41) hin offene, nach innen sich erweiternde, radial einander gegenüberliegende Schlitze angebracht sind,

– dass die Mitnehmerbolzen (44, 45) in diese Schlitze unverlierbar eingeschnappt sind, insgesamt derart, dass die Zwischenwelle (15) ein einziges, vormontiertes Teil bildet, das mit seinen axialen Bohrungen (31, 22) auf die Gelenkköpfe (48, 49) aufgesteckt, mit den Mitnehmerbolzen (45, 44) in die Nuten (52, 53) eingesteckt und einzig durch die Kraft der Schraubenfeder (19) in der hiedurch gegebenen Montageposition gehalten ist.

2. Vorrichtung nach Anspruch 1, dadurch gekennzeichnet,

– dass das Innenteil (18) eine Verlängerung (28) aufweist, die an ihrem Ende federnde Haltehebel (35) trägt,

– dass die Schraubenfeder (19) auf diese Verlängerung (28) aufgeschoben ist,

– dass das Aussenteil (17) eine Verengung (23) aufweist,

– dass das Innenteil (18) mit seiner Verlängerung (28) durch die Verengung (23) des Aussenteils (17) geschoben ist, derart, dass die Schraubenfeder (19) teilweise zusammengedrückt und das Innenteil (18) durch die Haltehebel (35) unverlierbar im Aussenteil (17) gehalten ist.

3. Vorrichtung nach Anspruch 1, dadurch gekennzeichnet, dass die Gelenkköpfe (48, 49) und die in ihnen angeordneten Nuten (52, 53) integrierender Bestandteil der antreibenden (11) bzw. der abtreibenden Welle (12) sind.

4. Vorrichtung nach Anspruch 1, dadurch gekennzeichnet, dass die Gelenkköpfe (48, 49) und die in ihnen angeordneten Nuten (52, 53) als eigenständige Elemente ausgebildet sind, die mit der antreibenden (11) bzw. der abtreibenden Welle (12) starr verbunden sind.

## Claims

1. Apparatus for the positive connection of a driving shaft (11) to a driven shaft (12) which is not axially aligned therewith, in which two cardan joints are provided with an intermediate shaft (15) located between them, each of the joints being formed from a spherical head (48, 49), which is rigidly connected to one of the shafts (11, 12), from an axial, cylindrical bore (31, 22) in the intermediate shaft (15), in which is inserted the joint head (48, 49), from a driving slot in the joint head (48, 49) and from a driving pin (45, 44), constructed as a steel pin and whose shape is adapted to bore (31, 22) and the driving slot and which is anchored on the intermediate shaft (15), whilst engaging through the driving slot, and in which a helical spring (19) located in the interior of the intermediate shaft (15) exerts tension on the joints, characterized in that the driving slots of the joint heads (48, 49) are constructed as grooves (52, 53) open on one side, that the intermediate shaft (15) comprises a sleeve-like outer part (17) and an axially displaceable inner part (18) inserted therein, said parts (17, 18) together forming a torsionally rigid sliding connection, that the outer part (17) and inner part (18) are constructed as injection moulded plastic parts, that in the vicinity of the axial, cylindrical bore (31, 22) of the outer part (17) and the inner part (18) are fitted inwardly widening, radially facing slots open towards their end faces (40, 41), that the driving pins (44, 45) are undetachably snapped into said slots, in such a way that the intermediate shaft (15) forms a single, preassembled part mounted with its axial bores (31, 22) on the joint heads (48, 49), inserted with the driving pins (45, 44) in grooves (52, 53) and solely held in the resulting assembly position by the tension of the helical spring (19).

2. Apparatus according to claim 1, characterized in that the inner part (18) has an extension (28), which carries on its end resilient holding levers (35), that the helical spring (19) is mounted on said extension (28), that the outer part (17) has a constriction (23) and that the inner part (18) with its extension (28) is inserted through the constriction (23) of outer part (17) in such a way that the helical spring (19) is partly compressed and the inner part (18) is undetachably held in the outer part (17) by the holding levers (35).

3. Apparatus according to claim 1, characterized in that the joint heads (48, 49) and the grooves (52, 53) arranged therein are an integral component of the driving shaft (11) or the driven shaft (12).

4. Apparatus according to claim 1, characterized in that the joint heads (48, 49) and the grooves (52, 53) arranged therein are constructed as independent components, which are rigidly connected to the driving shaft (11) or driven shaft (12).

## Revendications

1. Dispositif pour l'accouplement positif d'un arbre d'entraînement (11) avec un arbre entraîné (12) qui n'est pas aligné axialement par rapport à celui-ci, deux articulations en cardan étant prévues, avec un arbre intermédiaire (15) disposé entre elles, chacune des articulations étant formée d'une tête articulée (48, 49), qui est rigidement reliée à l'un des arbres (11, 12), d'un alésage (31, 22) cylindrique axial situé dans l'arbre intermédiaire (15), dans lequel est introduite la tête articulée (48, 49), d'une fente d'entraînement située dans la tête articulée (48, 49) et d'un boulon d'entraînement (45, 44), réalisés sous forme de tige d'acier, déterminée dans sa forme selon l'alésage (31, 22) et la fente d'entraînement, boulon d'entraînement qui est ancré sur l'arbre intermédiaire (15) et qui est en prise à travers la fente d'entraînement, un ressort hélicoïdal (19), disposé à l'intérieur de l'arbre intermédiaire, exerçant à cette occasion une pression sur les articulations, caractérisé en ce que:

– les fentes d'entraînement des têtes articulées (48, 49) sont réalisées sous formes de rainures (52, 53) ouvertes sur un côté,

– que l'arbre intermédiaire (15) comprend une partie extérieure (17) en forme de douille et une partie intérieure (18) introduite dans celle-ci, coulissant axialement, ces parties (17, 18) formant ensemble une liaison coulissante rigide en rotation,

– la partie extérieure (17) et la partie intérieure (18) sont réalisées sous forme d'éléments en matière plastique coulée par injection,

– que des fentes s'étendant vers l'intérieur, mutuellement opposées radialement, sont adjointes dans la zone de l'alésage (31, 22) axial cylindrique de la partie extérieure (17) et de la partie intérieure (18), s'ouvrant vers les surfaces frontales (40, 41) de celles-ci,

– les boulons d'entraînement (44, 45) sont encliquetés dans ces fentes, de manière imperdable, et globalement, de sorte que l'arbre intermédiaire (15) forme une partie prémontée unique, qui est enfichée sur les têtes articulées (48, 49), avec ses alésages (31, 22) axiaux, qu'il est introduit dans les gorges (52, 53), avec les boulons d'entraînement (45, 44) et qu'il est uniquement maintenu dans la position de montage ainsi constituée par la force du ressort (19) hélicoïdal.

2. Dispositif selon la revendication 1, caractérisé en ce que:

– la partie intérieure (18) possède un prolongement (28) qui porte des levres de maintien (35) élastiques à son extrémité,

– le ressort hélicoïdal (19) est encagé sur ce prolongement (28),

– la partie extérieure (17) présente un rétrécissement (23),

– la partie intérieure (18) avec son prolongement (28) est poussée par le rétrécissement (23) de la partie extérieure (17), de sorte que le ressort hélicoïdal (19) soit partiellement compressé et que la partie intérieure (18) soit maintenue de manière imperdable dans la partie extérieure (17), par les leviers de maintien (35).

3. Dispositif selon la revendication 1, caractérisé en ce que les têtes articulées (48, 49) et les gorges (52, 53) qui leur sont affectées, sont des parties constitutives intégrées de l'arbre d'entraînement (11), respectivement de l'arbre entraîné (12).

4. Dispositif selon la revendication 1, caractérisé en ce que les têtes articulées (48, 49) et les gorges (52, 53) qui leur sont affectées sont réalisées sous forme d'éléments originaux, qui sont rigidement reliés à l'arbre d'entraînement (11), respectivement à l'arbre entraîné (12).